# EUROPÄISCHE PATENTANMELDUNG

(11) **EP 0 789 182 A1**
(43) Veröffentlichungstag der Anmeldung: **13.08.1997**
(21) Anmeldenummer: 97101660.5
(22) Anmeldetag: 04.02.1997
(51) Int. Cl.: F16P 3/14

(54) **Sicherungseinrichtung für handbediente Werkzeugmaschinen, insbesondere für Abkantpressen**

(30) Priorität: 10.02.1996 DE 19604900
(71) Anmelder: Wegener, Hermann, 48683 Ahaus-Alstätte (DE)
(72) Erfinder: Wegener, Hermann, 48683 Ahaus-Alstätte (DE)
(74) Vertreter: Schulze Horn & Partner

(57) **Zusammenfassung**

Die Erfindung betrifft eine Sicherungseinrichtung für handbediente Werkzeugmaschinen (1), insbesondere Abkantpressen, wobei die Sicherungseinrichtung mehrere Lichtschranken (5, 5', 6) umfaßt, und mit einer Steuereinrichtung der Maschine (1) zusammenwirkt.

Die Sicherungseinrichtung gemäß Erfindung ist dadurch gekennzeichnet,
- daß mehrere Lichtschranken (5, 5') zumindest in der durch den Bewegungsweg des bewegten Werkzeuges (2) definierten Ebene mit parallel zueinander und parallel zur vorlaufenden Kante (21) des bewegten Werkzeuges (2) ausgerichteten Lichtstrahlen (50) angeordnet sind,
- daß jede Lichtschranke (5, 5', 6) einzeln wirksam oder unwirksam schaltbar ist und
- daß die Sicherungseinrichtung in der Weise mit der Steuereinrichtung der Maschine (1) zusammenwirkt, daß in Abhängigkeit von der momentanen Position des in Zustellrichtung bewegten Werkzeuges (2) nur die noch nicht von dem bewegten Werkzeug (2) und die nicht vom Werkstück (4) und die nicht vom Gegenwerkzeug (3) unterbrochenen Lichtschranken (5) jeweils wirksam geschaltet sind.

## Beschreibung

Die Erfindung betrifft eine Sicherungseinrichtung für handbediente Werkzeugmaschinen mit langsam bewegten Werkzeugen, insbesondere für Abkantpressen, wobei die Sicherungseinrichtung mehrere Lichtschranken umfaßt, von denen zumindest eine ortsfest im Bewegungsbereich des bewegten Werkzeuges vorgesehen ist, und wobei die Sicherungseinrichtung mit einer Steuereinrichtung der Maschine in der Weise zusammenwirkt, daß bei Unterbrechung einer oder mehrerer der Lichtschranken durch eine Bedienungsperson während einer gefahrverursachenden Zustellbewegung des Werkzeuges zu einem ortsfesten Gegenwerkzeug oder zu einem darauf angeordneten zu bearbeitenden Werkstück das Werkzeug stillgesetzt und/oder zurückgefahren wird.

Allgemein bekannt und durch gesetzliche Regelungen zur Sicherung von Bedienungspersonen einschlägiger Werkzeugmaschinen vorgeschrieben sind Sicherheits-Lichtvorhänge und -Lichtgitter. Diese Lichtvorhänge oder Lichtgitter sind im allgemeinen in einem Abstand vor gefahrverursachenden Maschinenteilen oder -bereichen angeordnet, damit die Sicherungseinrichtung nicht durch bewegte Teile der Maschine selbst ausgelöst werden kann. Aufgrund der Anbringung der Lichtvorhänge oder -gitter in einem Abstand vor der Maschine ist deren Bedienung erschwert, was, wie in der Praxis häufig zu beobachten ist, dazu verleitet, die Sicherungseinrichtung zum Zweck einer höheren Produktivität der Maschine auszuschalten und ein erhöhtes Unfallrisiko für das Bedienungspersonal in Kauf zu nehmen.

Eine demgegenüber schon weiterentwickelte Sicherungseinrichtung der oben genannten Art ist aus der EP-0 141 677 A2 bekannt. Bei dieser Sicherungseinrichtung für eine Abkantpresse ist eine erste einzelne Lichtschranke in der Bewegungsebene des bewegten Werkzeuges unmittelbar über einem zu bearbeitenden Werkstück angeordnet. Eine oder mehrere zweite Lichtschranken sind in einer zu der Bewegungsebene des bewegten Werkzeuges versetzten Ebene vor dem Bewegungsbereich des bewegten Werkzeuges parallel zu der ersten Lichtschranke angeordnet. Weiterhin gehört zu dieser Sicherungseinrichtung eine elektronische Auswerteeinheit, die die Reihenfolge erkennen kann, in der die verschiedenen Lichtschranken unterbrochen werden. Wird zuerst eine der zweiten Lichtschranken und danach die erste Lichtschranke unterbrochen, wird dies als gefährliche Situation angesehen, da diese Reihenfolge üblicherweise dann auftritt, wenn von außen ein Zugriff in den Bewegungsbereich des bewegten Werkzeutes erfolgt. Umgekehrt wird, wenn zuerst die erste Lichtschranke und danach eine der zweiten Lichtschranken unterbrochen wird, keine Gefahrensituation angenommen, da diese Reihenfolge üblicherweise dann auftritt, wenn bei der Umformung des zu bearbeitenden Werkstückes Werkstückbereiche unter dem Einfluß des bewegten Werkzeuges eine der zweiten Lichtschranken unterbrechen, nachdem zuvor die erste Lichtschranke durch das bewegte Werkzeug unterbrochen wurde.

Die Sicherungseinrichtung erfordert also eine relativ aufwendige Auswerteeinheit, wobei zudem eine zuverlässige Funktion nicht immer gewährleistet ist, weil es durchaus Situationen geben kann, die für das Bedienungspersonal gefährlich sind, aber von der Sicherungseinrichtung nicht als gefährlich eingeordnet werden, insbesondere wenn unter Umgehung der zweiten Lichtschranken die Bedienungsperson z.B. mit ihren Händen in den Auftreffbereich des bewegten Werkzeuges auf das Werkstück gerät.

Aus der DE 27 50 234 C2 ist eine weitere Sicherungseinrichtung der eingangs genannten Art bekannt, die mit zwei Lichtschranken arbeitet. Eine erste Lichtschranke ist mit dem bewegten Werkzeug räumlich starr gekoppelt und zusammen mit dem Werkzeug aufwärts und abwärts verfahrbar. Diese erste Lichtschranke ist so ausgerichtet, daß deren Lichtstrahl knapp vor der bei der Zustellbewegung des bewegten Werkzeuges vorlaufenden Werkzeugkante verläuft. Die zweite Lichtschranke ist so angeordnet und ausgerichtet, daß ihr Lichtstrahl durch eine prismaförmige Eintiefung im Gegenwerkzeug unterhalb der Auflagefläche für das zu bearbeitende Werkstück verläuft. Weiterhin gehören zu dieser Sicherungseinrichtung zwei Endschalter, die relativ zu der Maschine, auch hier eine Abkantpresse, verstellbar sind. Der erste Endschalter wird so angeordnet, daß er bei Zustellung des bewegten Werkzeuges kurz vor Erreichen des Werkstücks betätigt wird, z.B. bei einem Abstand von etwa 4 bis 6 mm. In dieser Stellung des bewegten Werkzeuges wird durch Betätigung des Endschalters die erste Lichtschranke ausgeschaltet. Die zweite Lichtschranke dient dazu, bei einer Zustellbewegung des bewegten Werkzeuges Gefahren zu verhindern, wenn kein Werkstuck auf dem Gegenwerkzeug aufliegt. Über den zugehörigen zweiten Endschalter erfolgt auch hier eine Ausschaltung der zweiten Lichtschranke, wenn das bewegte Werkzeug einen so kleinen Abstand vom Gegenwerkzeug erreicht hat, daß z.B. die Finger einer menschlichen Hand nicht mehr zwischen die Werkzeuge passen. Die Zuverlässigkeit dieser Sicherungseinrichtung hängt sehr wesentlich von der Genauigkeit der Justierung der Lichtschranken und der zugehörigen Endschalter ab, wodurch in der Praxis das Risiko besteht, daß bei mangelnder Sorgfalt die Sicherung der Bedienungsperson nicht ausreichend ist.

Es stellt sich deshalb die Aufgabe, eine Sicherungseinrichtung der eingangs genannten Art zu schaffen, die einerseits einen geringen Aufwand bei ihrer Einrichtung und Einstellung erfordert und die andererseits ein hohes Sicherheitsniveau für das Bedienungspersonal bietet, ohne dieses bei der Bedienung der Maschine zu behindern.

Die Lösung dieser Aufgabe gelingt erfindungsgemäß durch eine Sicherungseinrichtung der eingangs genannten Art, die dadurch gekennzeichnet ist,
- daß mehrere Lichtschranken zumindest in der durch den Bewegungsweg des bewegten Werkzeuges definierten Ebene mit parallel zueinander und parallel zur vorlaufenden Kante des bewegten Werkzeuges ausgerichtete Lichtstrahlen ortsfest angeordnet sind,
- daß jede Lichtschranke einzeln wirksam oder unwirksam schaltbar ist und
- daß die Sicherungseinrichtung in der Weise mit der Steuereinrichtung der Maschine zusammenwirkt, daß in Abhängigkeit von der momentanen Position des in Zustellrichtung bewegten Werkzeuges nur die noch nicht von dem bewegten Werkzeug und die nicht vom Werkstück und die nicht vom Gegenwerkzeug unterbrochenen Lichtschranken jeweils wirksam geschaltet sind.

Mit der Erfindung wird vorteilhaft eine Sicherungseinrichtung geschaffen, die sich selbsttätig an die momentanen Gegebenheiten, insbesondere hinsichtlich der aktuellen Lage des bewegten Werkzeuges, anpaßt. Je nach Stellung des bewegten Werkzeuges ist ein Teil der Lichtschranken wirksam geschaltet und ein anderer Teil der Lichtschranken unwirksam geschaltet, wobei die wirksam geschalteten Lichtschranken einen Halt und/oder ein Zurückfahren des bewegten Werkzeuges bewirken, sobald eine von ihnen unterbrochen wird, z.B. durch die Hand der Bedienungsperson. Eine beabsichtigte und von der Steuereinrichtung erkannte Unterbrechung des Lichtstrahls einer oder mehrerer Lichtschranken durch das bewegte Werkzeug hat dagegen keinen Einfluß auf die Werkzeugbewegung. Störungsanfällige bewegliche elektrische Verbindungen und aufwendige mechanische Einstellarbeiten bei der Einrichtung der Maschine und bei der Anpassung der Sicherungseinrichtung an bestimmte Werkzeuge entfallen hier, weil alle Lichtschranken ortsfest angeordnet sind, wodurch die Produktivität und zugleich die Sicherheit erhöht wird. Auch das Zu- und Abführen von Werkstücken und deren Handhabung während der Bearbeitung sind durch die Sicherungseinrichtung in keiner Weise behindert, so daß sich in der Praxis keine Anreize daführ ergeben, die Sicherungseinrichtung auszuschalten oder zu umgehen. Mittel zur Erfassung der momentanen Position des bewegten Werkzeuges sind bei modernen, numerisch kontrollierten und gesteuerten Maschinen ohnehin vorhanden; bei noch nicht so ausgerüsteten Maschinen können entsprechende Mittel auch ohne weiteres nachgerüstet werden, da sie dem Fachmann bekannt sind und am Markt zur Verfügung stehen.

Bevorzugt ist vorgesehen, daß die Lichtschranken jeweils in einem konstanten Abstand s zueinander angeordnet sind, wobei dieser Abstand vorzugsweise maximal 8 mm beträgt. Dieser Abstand ist so klein, daß selbst ein einzelner Finger der Hand der Bedienungsperson nicht mehr ohne Unterbrechung einer der Lichtschranken in den Bereich der Sicherungseinrichtung geführt werden kann.

Da bei der Umformung des Werkstücks Teile desselben erhebliche Bewegungen ausführen können, die zusätzliche Gefahren für das Bedienungspersonal darstellen, ist vorgesehen, daß weitere Lichtschranken außerhalb der durch den Bewegungsweg des bewegten Werkzeuges definierten Ebene in solchen Bereichen angeordnet oder anbringbar sind, in denen Teile des Werkstücks bei seiner Bearbeitung gefahrverursachende Bewegungen relativ zu einem der Werkzeuge und/oder zu weiteren Teilen der Werkzeugmaschine ausführen. Auch diese Lichtschranken sind zweckmäßig einzeln wirksam oder unwirksam schaltbar und unterliegen der Kontrolle der Steuereinrichtung der Maschine, so daß auch hier je nach Position des bewegten Werkzeuges und je nach der Lage der hierdurch bewegten Werkstückteile gezielt bestimmte der weiteren Lichtschranken wirksam oder unwirksam schaltbar sind.

Zur Vereinfachung der Arbeit des Bedienungspersonals und zur Gewährleistung einer hohen Arbeitssicherheit ist weiter vorgesehen, daß für alle auf einer Werkzeugmaschine eingesetzten unterschiedlichen Werkzeuge in einer separaten oder Teil der Steuereinrichtung bildenden Datenspeichereinheit Steuerdatensätze für ein angepaßtes Wirksam- und Unwirksamschalten der einzelnen Lichtschranken vorab abgelegt sind. Insbesondere enthalten die Steuerdatensätze Informationen über die Konturen der eingesetzten Werkzeuge. Da die auf der Werkzeugmaschine gefertigten Werkstücke in der Regel sehr häufig wechseln und sehr unterschiedliche Formen und Maße aufweisen, werden die Werkstückform und -maße vor einem Bearbeitungsgang vorzugsweise jeweils individuell programmiert, wodurch dann die schon vorab abgelegten Steuerdatensätze für die Werkzeugkonturen um Datensätze für die Werkstückform und -maße ergänzt werden können. Die vorab abgelegten Werkzeug-Steuerdatensätze können vom Bedienungspersonal über eine Eingabeeinheit, z.B. eine Tastatur, einfach abgerufen werden, z.B. indem jedem Werkzeug eine bestimmte Kenn-Nummer zugeordnet ist. Die Steuerdatensätze können z.B. durch Programmierung oder in einem "Teach-in"-Verfahren erzeugt sein und sind dann vom Benutzer der Maschine nicht mehr manipulierbar. Auch in Fällen, in denen die Bedienungsperson einem eingesetzten bewegten Werkzeug eine falsche Kenn-Nummer zuordnet, bleibt die volle Sicherheit erhalten. Einerseits wird, wenn die eingegebene Kenn-Nummer zu einem Werkzeug gehört, dessen vertikale Länge kleiner ist als die des eingebauten Werkzeuges, die Vorschubbewegung schon vor dem Erreichen des Werkstücks oder des Gegenwerkzeuges beendet, weil die Steuereinrichtung eine Vorschubbegrenzung enthält, die ein Gegeneinanderfahren von bewegtem Werkzeug und Gegenwerkzeug über einen bestimmten Abstand hinaus unterbindet. Andererseits wird, wenn ein Werkzeug eingebaut ist, dessen vertikale Länge größer ist als die des der eingegebenen Kenn-Nummer zugeordneten Werkzeuges, die Maschine stillgesetzt, weil das eingesetzte Werkzeug eine oder mehrere der noch wirksam geschalteten Lichtschranken unterbricht.

Um die Installation der Sicherungseinrichtung zu vereinfachen und um Manipulationen an den Lichtschranken und ihrer Anordnung zu verhindern, wird vorgeschlagen, daß die Lichtquellen und -empfänger der Lichtschranken jeweils in einem gemeinsamen Traggestell oder Gehäuse gehaltert sind.

Ebenfalls zur Vermeidung von die Sicherheit beeinträchtigenden Manipulationen ist vorgesehen, daß die Traggestelle oder Gehäuse nur bei ihrer Anbringung an der Werkzeugmaschine in ihrer Lage relativ zu der Maschine verstellbar und danach manipulationssicher fixiert sind.

Ein Ausführungsbeispiel der Sicherungseinrichtung gemäß Erfindung wird im folgenden anhand einer Zeichnung erläutert. Die Figuren der Zeichnung zeigen:
- Figur 1: eine Werkzeugmaschine mit Sicherungseinrichtung in einer vereinfachten schematischen Darstellung in Frontalansicht und
- Figur 2: die Werkzeugmaschine mit Sicherungseinrichtung aus Figur 1 im Schnitt entsprechend der Linie II-II in Figur 1.

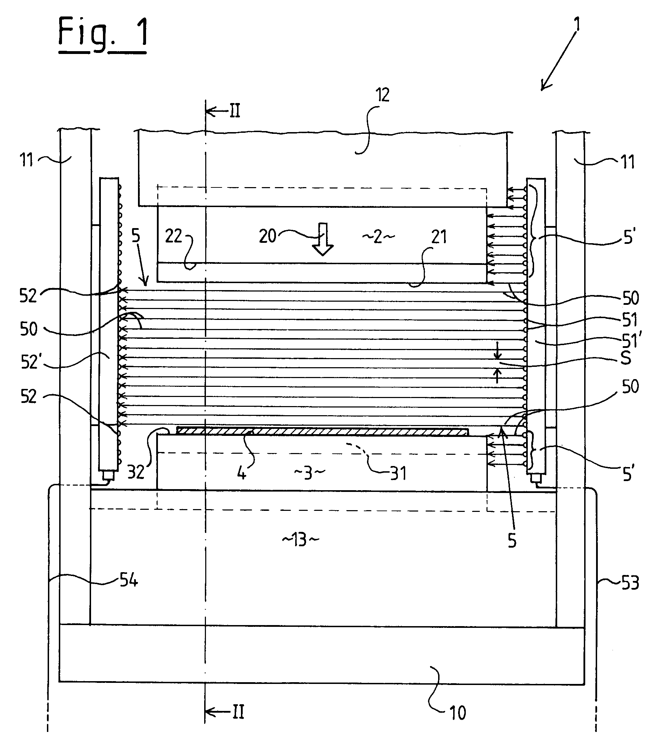

Wie die Figur 1 der Zeichnung zeigt, umfaßt die hier beispielhaft als Werkzeugmaschine 1 dargestellte Abkantpresse einen Maschinen-Grundrahmen 10, auf dem eine Werkzeugaufnahme 13 angeordnet ist. Links und rechts erstrekken sich vom Grundrahmen 10 zwei Träger 11 nach oben. Im oberen Teil der Figur 1 ist ein Werkzeughalter 12 für ein bewegtes Werkzeug 2 erkennbar, welches in Vertikalrichtung verfahrbar ist. Zur Erzeugung dieser Bewegung ist im oberen, hier nicht dargestellten Teil der Werkzeugmaschine 1 ein an sich bekannter Kraftantrieb, z.B. mit hydraulischen Kolben-Zylinder-Einheiten, vorhanden.

Auf der Werkzeugaufnahme 13 ist ein Gegenwerkzeug 3 angebracht, das mit dem bewegten Werkzeug 2 zusammenwirken kann, um ein Werkstück 4, hier eine Blechtafel, die auf eine oberseitige Auflagefläche 32 des Gegenwerkzeuges 3 aufgelegt ist, in gewünschter Weise umzuformen, hier abzukanten. Dazu ist das bewegte Werkzeug 2, wie an sich bekannt, im vorliegenden Beispiel mit einer vorlaufenden nach unten weisenden Kante 21 ausgebildet und die Oberseite des Gegenwerkzeuges 3 mit einer gegengleichen, nach oben hin offenen V-Nut 31 versehen.

Weiterhin gehört zu der Maschine 1 eine Sicherungseinrichtung, die eine Vielzahl von Lichtschranken 5, 5' umfaßt. Die Lichtstrahlen 50 der Lichtschranken 5, 5' verlaufen in horizontaler Richtung parallel übereinander in einer vertikalen, durch den Bewegungsweg des bewegten Werkzeuges 2 in Richtung des Bewegungspfeiles 20 definierten Ebene. An der rechten Seite der Maschine 1 ist an dem dortigen Träger 11 ein Gehäuse 51' befestigt, welches eine Vielzahl von in Reihe übereinander angeordneten Lichtquellen 51 enthält. Jede dieser Lichtquellen 51 sendet einen Lichtstrahl 50, z.B. einen Laserstrahl aus. Auf der gegenüberliegenden Seite der Maschine 1, d.h. in der Zeichnung links, ist an dem dortigen Träger 11 ein zweites Gehäuse 52' befestigt, welches in gleicher Anordnung wie bei den Lichtquellen 51 eine Vielzahl von in Reihe übereinander angeordneten Lichtempfängern 52 enthält. Sowohl die Lichtquellen 51 als auch die Lichtempfänger 52 stehen über elektrische Leitungsverbindungen 53 und 54 mit einer hier nicht dargestellten Steuereinrichtung der Maschine 1 in elektrischer Verbindung.

Das Zusammenwirken der Lichtschranken 5, 5' und der zur Maschine 1 gehörenden Steuereinrichtung erfolgt in der Weise, daß bei Unterbrechung einer der Lichtschranken durch z.B. die Hand einer Bedienungsperson die Steuereinrichtung das bewegte Werkzeug 2 stillsetzt oder zurückfährt, wie dies an sich bekannt ist.

Da, wie aus der Zeichnung ersichtlich ist, bei der Zustellbewegung des bewegten Werkzeuges 2 zunehmend mehr Lichtstrahlen 50 von Lichtschranken 5, 5' unterbrochen werden, ist zur Vermeidung eines Stillsetzens der Maschine 1 infolge der Bewegung des Werkzeuges 2 vorgesehen, daß die Steuereinrichtung diejenigen Lichtschranken 5', deren Lichtstrahl von dem bewegten Werkzeug 2 unterbrochen wird, kurz vor dem Zeitpunkt der Unterbrechung unwirksam schaltet. Es bleiben also lediglich diejenigen Lichtschranken 5 wirksam geschaltet, die nicht von dem bewegten Werkzeug 2 unterbrochen sind. Auch diejenigen Lichtschranken 5', deren Lichtstrahlen 50 durch das Gegenwerkzeug 3 und das Werkstück 4 unterbrochen sind, sind unwirksam geschaltet. Das Unwirksamschalten der einzelnen Lichtschranken kann dabei durch Ausschalten des Lichtsenders oder des Lichtempfängers oder auch rein programmseitig in der Steuereinrichtung erfolgen.

Auf diese Weise paßt sich die Sicherungseinrichtung jeweils an die aktuelle, gerade erreichte Lage des bewegten Werkzeuges 2 relativ zum Werkstück 4 und relativ zum Gegenwerkzeug 3 an. Zweckmäßig werden dabei die Lichtschranken 5 nach und nach unwirksam geschaltet, sobald sich die vorlaufende Kante 21 bis unmittelbar an den zugehörigen Lichtstrahl 50 der betreffenden Lichtschranke 5 heran bewegt hat. Hierdurch bleibt der während des Betriebes der Maschine 1 sich verändernde Zwischenraum zwischen der vorlaufenden Kante 21 des bewegten Werkzeuges 2 und der Oberseite des Werkstücks 4 oder des Gegenwerkzeuges 3 ständig und selbsttätig über seine gesamte Fläche gegen Eingriffe von außen, z.B. durch eine Bedienungsperson, gesichert. Mittel zur Erfassung und Weitergabe der aktuellen Position des bewegten Werkzeuges 2 sind an modernen, CNC-gesteuerten Werkzeugmaschinen 1 ohnehin vorhanden und können für den Zweck der entsprechenden Steuerung der Sicherungseinrichtung, wie oben beschrieben, genutzt werden. Bei Bedarf ist auch eine Nachrüstung einer noch nicht so ausgestatteten Werkzeugmaschine 1 mit Positionserfassungsmitteln für das bewegte Werkzeug 2 ohne weiteres möglich.

Bei der Anordnung der Lichtschranken 5, 5' ist zu beachten, daß der Abstand der einzelnen Lichtstrahlen 50 so klein gewählt wird, daß kein Eingriff in den Bereich der Lichtschranken 5, 5' unerkannt bleiben kann. In der Praxis beträgt der Abstand der einzelnen Lichtstrahlen 50 beispielsweise etwa 7 bis 8 mm. Auf diese Weise bilden die Lichtschranken 5, 5' einen dichten Sicherheits-Lichtvorhang, der Gefahren für das Bedienungspersonal sicher ausschließt.

Um die Sicherheit beeinträchtigende Manipulationen auszuschließen, sind die Gehäuse 51', 52' mit den darin angeordneten Lichtquellen 51 und Lichtempfängern 52 relativ zu den Trägern 11 unverschiebbar und manipulationssicher fixiert.

Alle Daten und Programme, die für den Betrieb der Sicherungseinrichtung benötigt werden, sind zweckmäßig in eine vorhandene Steuereinrichtung, die heutzutage üblicherweise eine CNC-Steuerung ist, integriert. Auch vom Maschinenbediener für die Eingabe von Werkstückform und -maßen zu benutzende Programmiereinrichtungen sind an sich bekannt und können hier eingesetzt werden.

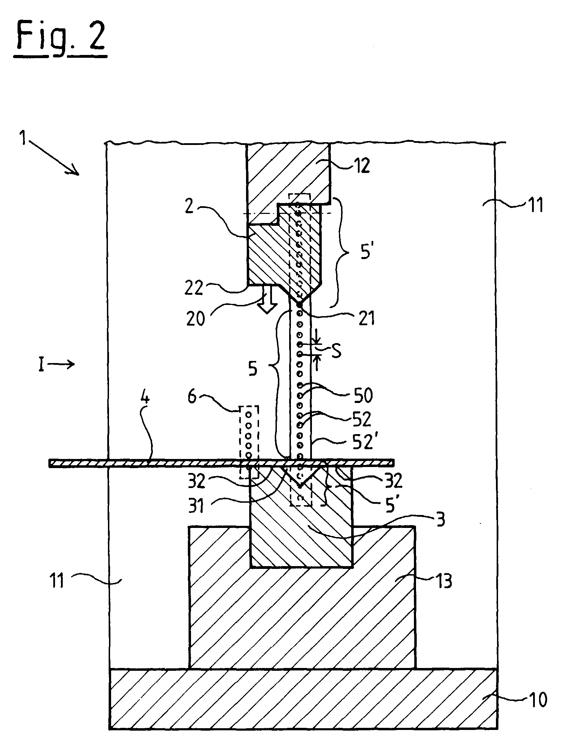

Figur 2 der Zeichnung zeigt im Schnitt entlang der Linie II - II in Figur 1 die Maschine im Querschnitt. Im unteren Teil der Figur 2 ist wieder der Maschinengrundrahmen 10 erkennbar, auf welchem die Werkzeugaufnahme 13 mit dem Gegenwerkzeug 3 angeordnet ist. Im Hintergrund erstreckt sich der in Figur 1 linke Träger 11 nach oben. Im oberen mittleren Teil der Figur 2 ist der Werkzeughalter 12 mit dem bewegten Werkzeug 2 erkennbar, wobei diese lösbar miteinander verbunden sind.

Auf den Auflageflächen 32 des Gegenwerkzeuges 3 liegt das Werkstück 4 auf, das hier noch unbearbeitet ist.

Im Hintergrund ist das Gehäuse 52' mit den Lichtempfängern 52 der Lichtschranken 5, 5' erkennbar, wobei das Gehäuse 52' teilweise durch das bewegte Werkzeug 2 und in seinem unteren Teil teilweise durch das Gegenwerkzeug 3 und das Werkstück 4 verdeckt ist.

Wie die Figur 2 besonders deutlich zeigt, liegen die Lichtschranken 5, 5' genau in der Bewegungsebene der vorlaufenden Kante 21 des bewegten Werkzeuges 2.

Zur Bearbeitung des Werkstücks 4 wird der Werkzeughalter 12 mit dem bewegten Werkzeug 2 durch den oben erwähnten, hier nicht dargestellten Kraftantrieb nach unten bewegt, wobei die Zustellung bis in die Nähe der Oberfläche des Werkstücks 4 zunächst mit einer höheren Vorschubgeschwindigkeit erfolgen kann; nach Erreichen eines geringen Abstandes der vorlaufenden Kante 21 des bewegten Werkzeuges 2 von der Oberseite des Werkstücks 4 wird auf eine langsamere Arbeitsgeschwindigkeit umgeschaltet, wie dies an sich bekannt ist.

Bei der Zustellbewegung des bewegten Werkzeuges 2 in Richtung des Bewegungspfeiles 20 durchläuft das Werkzeug 2 nacheinander von oben nach unten eine Lichtschranke 5, 5' nach der anderen. Durch die oben erläuterte Steuereinrichtung, die mit der Sicherungseinrichtung zusammenwirkt, werden jeweils die Lichtschranken 5, 5', die als nächstes von dem bewegten Werkzeug 2 durchlaufen werden, kurz zuvor unwirksam geschaltet, so daß stets diejenigen Lichtschranken 5 wirksam geschaltet bleiben, die im freien Bereich zwischen der vorlaufenden Kante 21 des bewegten Werkzeuges 2 und der Oberseite des Werkstücks 4 liegen. Die in der Figur 2 mit der Bezugsziffer 5' bezeichneten Lichtschranken sind in dem gezeigten Zustand der Maschine 1 gerade unwirksam geschaltet.

Der Abstand der Lichtstrahlen 50 der Lichtschranken 5, 5' beträgt s, in der Praxis z.B. 7 bis 8 mm.

Weiterhin zeigt die Figur 2 eine zusätzliche Lichtschrankenanordnung 6. Diese zusätzliche Lichtschrankenanordnung 6 kann bedarfsweise vorgesehen werden, wenn das Werkstück 4 bei seiner Umformung durch die Werkzeuge 2, 3 Bewegungen ausführt, die zu einer Quetschgefahr oder sonstigen Gefährdung für das Bedienungspersonal führen. Im vorliegenden Fall bildet eine zweite Werkzeugkante 22, die an der dem Bediener der Maschine 1 zugewandten Seite, d.h. in Figur 2 links, liegt, zusammen mit dem Werkstück 4 einen potentiellen Gefahrenbereich. Um diesen Gefahrenbereich abzusichern, ist die zusätzliche Lichtschrankenanordnung 6 in dem Bereich angeordnet, in dem sich die Kante 22 des bewegten Werkzeuges 2 und das Werkstück 4 aneinander annähern, im vorliegenden Fall in einem seitlichen Abstand parallel zu den ersten Lichtschranken 5, 5'. Diese zusätzliche Lichtschrankenanordnung 6 wird vorzugsweise ebenso betrieben, wie die Lichtschrankenanordnung 5, 5'.

Zur Anpassung an unterschiedliche Werkzeuge 2, 3 und unterschiedliche zu bearbeitende Werkstücke 4 ist die gegebenenfalls vorhandene Lichtschrankenanordnung 6 relativ zu der übrigen Werkzeugmaschine 1 in ihrer Position veränderbar und nach geeigneter Ausrichtung fixierbar.

## Patentansprüche

1. Sicherungseinrichtung für handbediente Werkzeugmaschinen (1) mit langsam bewegten Werkzeugen (2), insbesondere für Abkantpressen, wobei die Sicherungseinrichtung mehrere Lichtschranken (5, 5', 6) umfaßt, von denen zumindest eine ortsfest im Bewegungsbereich des bewegten Werkzeuges (2) vorgesehen ist, und wobei die Sicherungseinrichtung mit einer Steuereinrichtung der Maschine (1) in der Weise zusammenwirkt, daß bei Unterbrechung einer oder mehrerer der Lichtschranken (5, 5', 6) durch eine Bedienungsperson während einer gefahrverursachenden Zustellbewegung des Werkzeuges (2) zu einem ortsfesten Gegenwerkzeug (3) oder zu einem darauf angeordneten zu bearbeitenden Werkstück (4) das Werkzeug (2) stillgesetzt und/oder zurückgefahren wird,
**dadurch gekennzeichnet,**
- daß mehrere Lichtschranken (5, 5') zumindest in der durch den Bewegungsweg des bewegten Werkzeuges (2) definierten Ebene mit parallel zueinander und parallel zur vorlaufenden Kante (21) des bewegten Werkzeuges (2) ausgerichteten Lichtstrahlen (50) ortsfest angeordnet sind,
- daß jede Lichtschranke (5, 5', 6) einzeln wirksam oder unwirksam schaltbar ist und
- daß die Sicherungseinrichtung in der Weise mit der Steuereinrichtung der Maschine (1) zusammenwirkt, daß in Abhängigkeit von der momentanen Position des in Zustellrichtung bewegten Werkzeuges (2) nur die noch nicht von dem bewegten Werkzeug (2) und die nicht vom Werkstück (4) und die nicht vom Gegenwerkzeug (3) unterbrochenen Lichtschranken (5) jeweils wirksam geschaltet sind.

2. Sicherungseinrichtung nach Anspruch 1, dadurch gekennzeichnet, daß die Lichtschranken (5, 5', 6) jeweils in einem konstanten Abstand s zueinander angeordnet sind.

3. Sicherungseinrichtung nach Anspruch 2, dadurch gekennzeichnet, daß der Abstand s maximal 8 mm beträgt.

4. Sicherungseinrichtung nach einem der vorangehenden Ansprüche, dadurch gekennzeichnet, daß weitere Lichtschranken (6) außerhalb der durch den Bewegungsweg des bewegten Werkzeuges (2) definierten Ebene in solchen Bereichen angeordnet oder anbringbar sind, in denen Teile des Werkstücks (4) bei seiner Bearbeitung gefahrverursachende Bewegungen relativ zu einem der Werkzeuge (2, 3) und/oder zu weiteren Teilen der Werkzeugmaschine (1) ausführen.

5. Sicherungseinrichtung nach einem der vorangehenden Ansprüche, dadurch gekennzeichnet, daß für alle auf einer Werkzeugmaschine (1) eingesetzten Werkzeuge (2, 3) in einer separaten oder Teil der Steuereinrichtung bildenden Datenspeichereinheit Steuerdatensätze für ein angepaßtes Wirksam- und Unwirksamschalten der einzelnen Lichtschranken (5, 5', 6) vorab abgelegt sind.

6. Sicherungseinrichtung nach einem der vorangehenden Ansprüche, dadurch gekennzeichnet, daß die Lichtquellen (51) und -empfänger (52) der Lichtschranken (5, 5') jeweils in einem gemeinsamen Traggestell oder Gehäuse (51', 52') gehaltert sind.

7. Sicherungseinrichtung nach Anspruch 6, dadurch gekennzeichnet, daß die Traggestelle oder Gehäuse (51', 52') nur bei ihrer Anbringung an der Werkezugmaschine (1) in ihrer Lage relativ zu der Maschine (1) verstellbar und danach manipulationssicher fixiert sind.
